# EUROPÄISCHE PATENTSCHRIFT

(11) **EP 1 026 061 B1**
(45) Veröffentlichungstag und Bekanntmachung des Hinweises auf die Patenterteilung: **28.05.2003**
(21) Anmeldenummer: 99890330.6
(22) Anmeldetag: 21.10.1999
(51) Int. Cl.: B61B 7/00, B61B 12/02, B61B 3/00

(54) **Anlage zur Bewegung von Personen von einer Bergstation in eine Talstation**
Installation to move persons from a higher station to a lower station
Installation pour le mouvement des personnes d'une station haute vers une station basse

(30) Priorität: 04.02.1999 AT 14599
(43) Veröffentlichungstag der Anmeldung: 09.08.2000
(73) Patentinhaber: Innova Patent GmbH, 6960 Wolfurt (AT)
(72) Erfinder: Albrich, Reinhard, 6850 Dornbirn (AT)
(74) Vertreter: Atzwanger, Richard, Dipl.-Ing. Patentanwalt

(56) Entgegenhaltungen:
- DE-A- 4 310 904
- GB-A- 642 098
- GB-A- 863 030

## Beschreibung

Die gegenständliche Erfindung betrifft eine Anlage zur Bewegung von Personen von einer Bergstation in eine Talstation mit einem Tragseil, welches über Stützen geführt ist, und mit längs des Tragseiles verfahrbaren Wagen, an welchen eine Einrichtung zur Aufnahme mindestens einer Person, wie eine Kabine, ein Sessel, ein Traggurt u.dgl., befestigt ist.

Eine derartige Anlage, welche aus der WO 98/36811 bekannt ist, weist eine Talstation und eine Bergstation auf, zwischen welchen einerseits ein Förderseil angeordnet ist, durch welches Fahrbetriebsmittel, z.B. mit einem Traggurt versehene Wagen, zur Bergstation gefördert werden können, und andererseits eine von Stützen getragene Schiene angeordnet ist, längs welcher die Wagen von der Bergstation zur Talstation abfahren können. In dieser Literaturstelle ist allerdings nur das Schema einer derartigen Anlage geoffenbart, wogegen konstruktive Details, welche für die Errichtung und den gefahrlosen Betrieb einer derartigen Anlage maßgeblich sind, nicht geoffenbart sind.

Der gegenständlichen Erfindung liegt somit die Aufgabe zugrunde, eine den konstruktiven und sicherheitstechnischen Erfordernissen entsprechende Anlage zur Bewegung von Personen von einer Bergstation in eine Talstation zu schaffen. Diese Aufgaben werden erfindungsgemäß dadurch gelöst, daß am Tragseil eine Trag- bzw. Führungsschiene befestigt ist, längs welcher die Wagen von der Bergstation in die Talstation verfahrbar sind.

Vorzugsweise ist die Trag- bzw. Führungsschiene durch eine T-förmige Schiene gebildet, wobei das obere Ende des Steges der T-förmigen Schiene am Tragseil befestigt ist und die vom Steg seitlich abragenden Schenkel der T-förmigen Schiene die Laufflächen für die Wagen bilden. Vorzugsweise sind weiters an den oberen Enden des vertikalen Steges der T-förmigen Schiene Laschen befestigt, welche das Tragseil umschließen, wobei diese Laschen gegenüber dem Tragseil verschiebbar sind.

Weiters können längs der Trag- bzw. Führungsschiene Einrichtungen zur Wirbelstrombremsung vorgesehen sein, durch welche die Geschwindigkeit der längs dieser Trag- und Führungsschiene fahrenden Wagen steuerbar ist. Dabei können in denjenigen Bereichen der Bahn, in welchen eine Bremsung der Wagen bewirkt werden soll, an der Trag- und Führungsschiene Leisten aus magnetisch nicht leitendem Material, insbesondere aus Kupfer, aus Aluminium oder aus Edelstahl, befestigt sein, welche mit an den Wagen angeordneten Permanentmagneten zusammenwirken.

Nach einer bevorzugten Ausführungsform sind die Wagen mit mindestens vier Laufrollen, welche an den Oberseiten der quer abragenden Schenkel der T-förmigen Schiene abrollen, mit mindestens zwei Gegenrollen, welche an den Unterseiten der Laufflächen der T-förmigen Schiene abrollen, und insbesondere mit vier Führungsrollen, welche am vertikalen Steg der T-förmigen Schiene abrollen, ausgebildet. Weiters kann die Trag- und Führungsschiene aus einer Vielzahl von einzelnen Schienen bestehen, welche miteinander verbunden sind. Die Leisten aus magnetisch nicht leitendem Material sind insbesondere in vor Kurven der Trag- und Führungsschiene befindlichen Bereichen vorgesehen. Weiters ist vorzugsweise in Bereichen von Kurven der Trag- und Führungsschiene das Tragseil über an Tragsäulen od.dgl. gelagerten Umlenkrollen geführt und ist die Trag- und Führungsschiene mittels Streben an den Tragsäulen befestigt. Zudem kann die Trag- und Führungsschiene in Bereichen von Kurven an den Tragsäulen mittels Streben abgestützt sein.

Eine erfindungsgemäße Anlage ist nachstehend anhand eines in der Zeichnung dargestellten Ausführungsbeispiels näher erläutert. Es zeigen:
- Fig. 1: eine derartige Anlage, in schematischer Darstellung,
- Fig. 2: die Bergstation dieser Anlage, in Seitenansicht,
- Fig. 2a: eine Stütze, in Stirnansicht,
- Fig. 2b: die Talstation dieser Anlage, in Seitenansicht,
- Fig. 3: die Trag- und Führungsschiene und einen Wagen, in Seitenansicht,
- Fig. 3a: die Trag- und Führungsschiene und einen Wagen, in Draufsicht,
- Fig. 3b: den Schnitt nach der Linie III-III der Fig. 3,
- Fig. 4: eine im Verlauf der Bahn angeordnete Tragsäule, in Seitenansicht, und
- Fig. 4a: die Tragsäule gemäß Fig. 4, in Draufsicht.

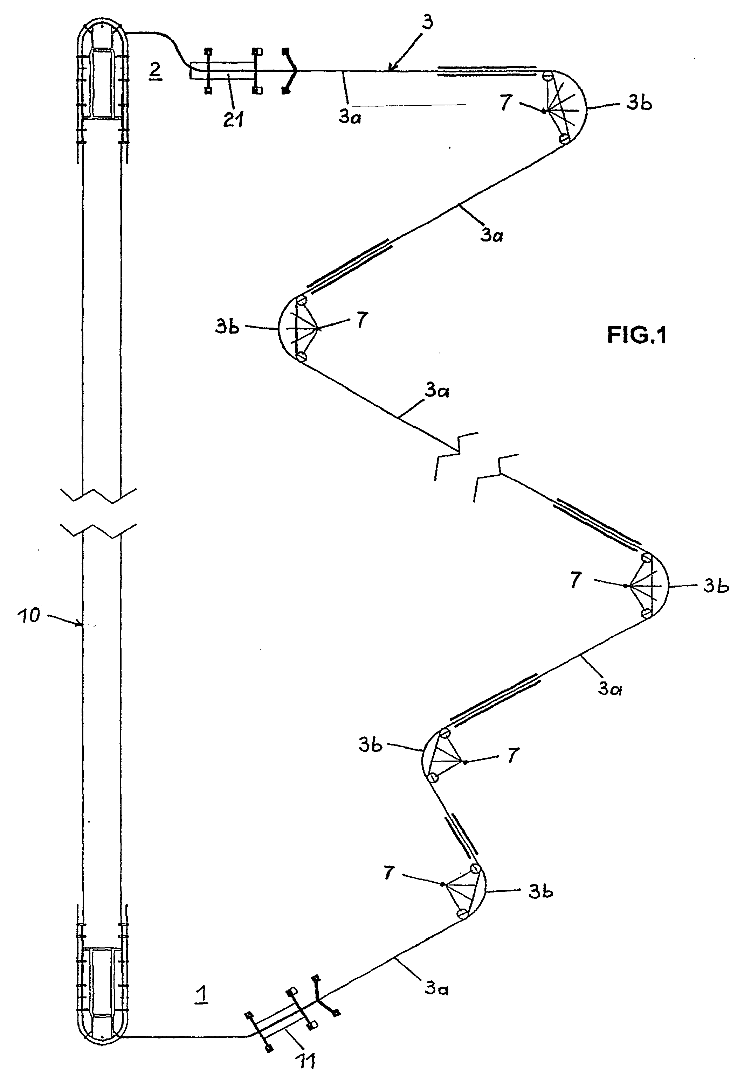

Die in Fig. 1 dargestellte Anlage zum Bewegen von Personen von einer Bergstation in eine Talstation enthält eine zwischen der Talstation 1 der Anlage und der Bergstation 2 der Anlage befindliche Fördereinrichtung 10 für Wagen, durch welche Personen von der Talstation 1 zur Bergstation 2 bewegt werden können. Diese Fördereinrichtung ist z.B. durch einen Schrägaufzug oder durch ein Trag- und Förderseil gebildet, an welches die Wagen ankuppelbar sind. Da dieser Teil der Anlage beliebig ausführbar ist und keinen Bestandteil der Erfindung bildet, ist er nicht weiters erläutert.

Von der Bergstation 2 geht eine abfallende, von Stützen und Säulen getragene und sich im Abstand vom Boden befindliche Schiene 3 ab, welche gerade Abschnitte 3a und gekrümmte Abschnitte 3b aufweist, wobei jedenfalls in den Bereichen der gekrümmten Abschnitte 3b Tragsäulen 7 vorgesehen sind, an welchen die Schiene 3 befestigt ist. In der Bergstation 2 befindet sich eine Einstiegsstelle 21 und in der Talstation 1 befindet sich eine Ausstiegsstelle 11. In der Einstiegsstelle 21 fährt ein Wagen mit mindestens einem Passagier auf die Schiene 3 auf. Hierauf fährt der Wagen längs der geraden Abschnitte 3a und der gekrümmten Abschnitte 3b der Schiene 3 ohne zusätzlichen Antrieb zu der in der Talstation 1 befindlichen Ausstiegsstelle 11 ab.

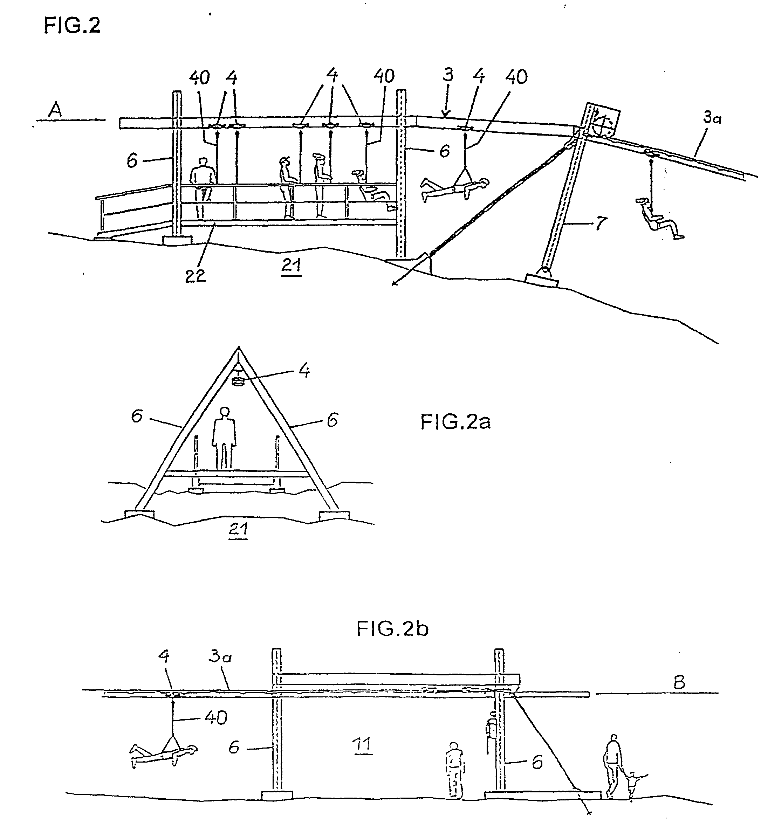

Aus den Fig. 2 und 2a ist die Ausbildung der Einsteigsstelle 21 ersichtlich. In der Einstiegsstelle 21 ist die von Stützen 6 getragene Führungsschiene 3 angenähert horizontal ausgerichtet. Längs der Führungsschiene 3 werden in Richtung des Pfeiles A Wagen 4 zugeführt, welche mit einem Traggurt 40 versehen sind, die zur Aufnahme von Passagieren, welche die Einstiegsstelle 21 über eine Rampe 22 betreten, dient. An den angenähert waagrechten Abschnitt der Schiene 3 schließen abfallend geneigte Abschnitte an, wodurch die Wagen 4 zur Talstation abzufahren beginnen. In diesem Bereich ist die Führungsschiene 3 von Säulen 7 getragen.
In der in Fig. 2b dargestellten Ausstiegsstelle 11 ist die Führungsschiene wiederum mit einem waagrechten Abschnitt 3a ausgebildet, in welchem die Wagen 4 so weitgehend verzögert werden, daß sie von den Passagieren verlassen werden können. In der Folge werden die Wagen 4 in Richtung des Pfeiles B zur Fördereinrichtung 10 bewegt, mittels welcher sie zur Bergstation 2 transportiert werden.

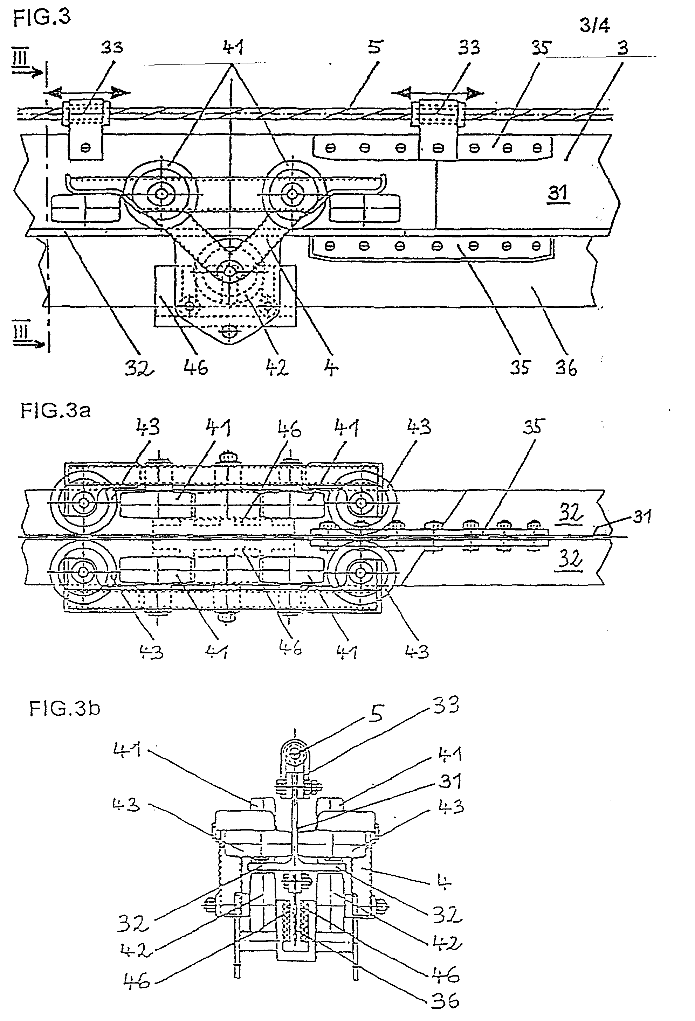

Nachstehend sind anhand der Fig. 3, 3a und 3b die Ausbildungen der Tragund Führungsschiene 3 und der Wagen 4 sowie die Befestigung der Tragund Führungsschiene 3 erläutert:
Zur Befestigung der Schiene 3 dient ein Seil 5, welches in der Bergstation 2 fest verankert ist; welches über an den Tragsäulen 7 gelagerten Tragrollen und Umlenkrollen geführt ist und welches in der Talstation 1 mittels einer Spannenvorrichtung vorgespannt ist. Die Trag- und Führungsschiene 3 ist im Querschnitt T-förmig ausgebildet, wobei der angenähert vertikal ausgerichtete, mittlere Steg 31 mittels U-förmigen Laschen 33 am Seil 5 befestigt ist, wobei die Laschen 33 gegenüber dem Seil 5 verschiebbar sind. Sowohl der mittlere Steg 31 als auch die beiden von diesem quer abragenden Schenkel 32 der T-förmigen Schiene 3 dienen als Führungsbahnen für die Rollen 41 des Wagens 4. Die einzelnen Abschnitte der Schiene 3 sind weiters mittels Laschen 35 miteinander verbunden.

Die Wagen 4 sind mit zwei Paaren von Laufrollen 41, welche an der Oberseite der beiden Schenkel 32 abrollen, einem Paar von Gegenrollen 42, welche an der Unterseite der beiden Schenkel 32 abrollen, und zwei Paaren von Führungsrollen 43, welche an den beiden Seitenflächen des Steges 31 abrollen, ausgebildet.

Zur Steuerung der Geschwindigkeit, mit welcher die Wagen 4 längs der Schiene 3 abfahren, sind an der Schiene 3 Leisten 36 aus magnetisch nicht leitendem Material, insbesondere aus Kupfer, aus Aluminium oder aus Edelstahl, vorgesehen, welche insbesondere vor gekrümmten Abschnitten 3b der Trag- und Führungsschiene 3 angeordnet sind und welchen an den Wagen 4 angeordnete Permanentmagneten 46 zugeordnet sind. Die Permanentmagneten 46 erfüllen mit den Schienen 36 aus nicht leitendem Material die Funktion von Wirbelstrombremsen, deren Wirkung der Geschwindigkeit der Wagen 4 direkt proportional ist. Hierdurch werden die längs der Trag- und Führungsschiene 3 abfahrenden Wagen 4 in ihrer Geschwindigkeit so gesteuert, daß eine zulässige Höchstgeschwindigkeit nicht überschritten wird, wodurch die Sicherheit der Passagiere gewährleistet ist.

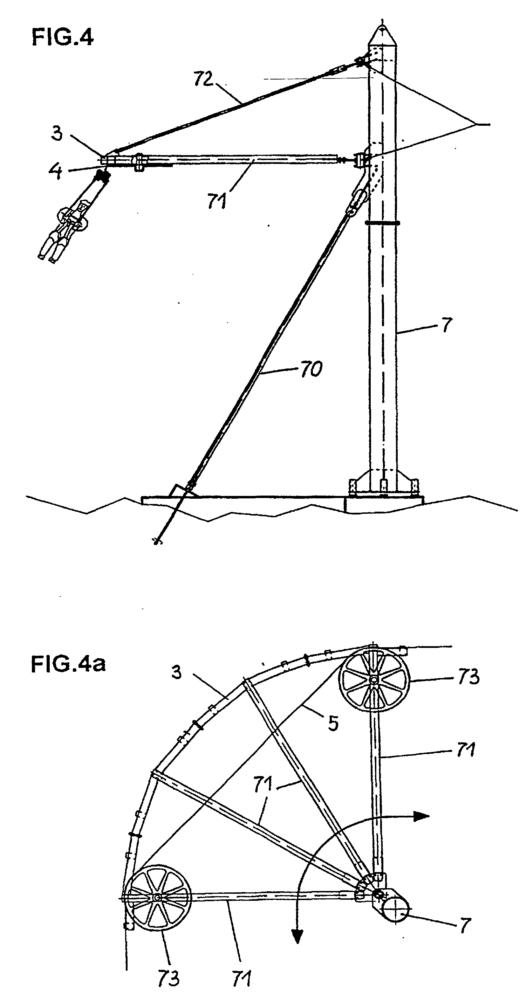

Wie dies aus den Fig. 4 und 4a ersichtlich ist, sind im Bereich der gekrümmten Abschnitte 3b der Führungsschiene 3 Tragsäulen 7 vorgesehen, welche mit über die Krümmung verteilten, mehreren angenähert horizontal abragenden Streben 71 ausgebildet sind, durch welche die Trag- und Führungsschiene 3 radial abgestützt ist. Die Streben 71 sind mittels Streben 72 abgestützt. An den beiden außen liegenden Streben 71 sind Führungsrollen 73 gelagert, über welche das Tragseil 5 geführt und umgelenkt ist. Um die erforderliche Beweglichkeit der Streben 71 zu gewährleisten, sind diese an der Tragsäule 7 um vertikale Achsen verschwenkbar angelenkt. Die Säulen 7 sind weiters mittels Streben 70 abgestützt.

## Patentansprüche

1. Anlage zur Bewegung von Personen von einer Bergstation (2) in eine Talstation (1) mit einem Tragseil (5), welches über Tragsäulen (7) od. dgl. geführt ist, und mit insbesondere längs des Tragseiles (5) verfahrbaren Wagen (4), an welchen eine Einrichtung zur Aufnahme mindestens einer Person, wie eine Kabine, ein Sessel, ein Traggurt (40) u. dgl., befestigt ist, **dadurch gekennzeichnet, daß** am Tragseil (5) eine Trag- bzw. Führungsschiene (3) befestigt ist, längs welcher die Wagen (4) von der Bergstation (2) in die Talstation (1) verfahrbar sind.

2. Anlage nach Patentanspruch 1, **dadurch gekennzeichnet, daß** die Trag- bzw. Führungsschiene durch eine T-förmige Schiene (3) gebildet ist, wobei das obere Ende des vertikalen Steges (31) der T-förmigen Schiene (3) am Tragseil (5) befestigt ist und die seitlich abragenden Schenkel (32) der T-förmigen Schiene (3) die Laufflächen für die Wagen (4) bilden.

3. Anlage nach einem der Patentansprüche 1 und 2, **dadurch gekennzeichnet, daß** an den oberen Enden des vertikalen Steges (31) der T-förmigen Schiene (3) Laschen (33) befestigt sind, welche das Tragseil (5) umschließen, wobei diese Laschen (33) gegenüber dem Tragseil (5) verschiebbar sind.

4. Anlage nach einem der Patentansprüche 1 bis 3, **dadurch gekennzeichnet, daß** längs der Trag- bzw. Führungsschiene (3) Einrichtungen (36, 46) zur Wirbelstrombremsung vorgesehen sind, durch welche die Geschwindigkeit der längs der Schiene (3) fahrenden Wagen (4) steuerbar ist.

5. Anlage nach einem der Patentansprüche 1 bis 4, **dadurch gekennzeichnet, daß** in denjenigen Bereichen der Schiene (3), in welchen eine Bremsung der Wagen (4) bewirkt werden soll, an der Schiene (3) Leisten (36) aus magnetisch nicht leitendem Material, insbesondere aus Kupfer, aus Aluminium und aus Edelstahl, befestigt sind, welche mit an den Wagen (4) angeordneten Permanent-Magneten (46) zusammenwirken.

6. Anlage nach einem der Patentansprüche 1 bis 5, **dadurch gekennzeichnet, daß** die Wagen (4) mit mindestens vier Laufrollen (41), welche an den Oberseiten der quer abragenden Schenkel (32) der T-förmigen Schiene (3) abrollen, mit mindestens zwei Gegenrollen (42), welche an den Unterseiten der Schenkel (32) der T-förmigen Schiene (3) abrollen, und insbesondere vier Führungsrollen (43), welche am vertikalen Steg (31) der T-förmigen Schiene (4) abrollen, ausgebildet sind.

7. Anlage nach einem der Patentansprüche 1 bis 6, **dadurch gekennzeichnet, daß** die T-förmige Trag- und Führungsschiene (3) aus einer Vielzahl von einzelnen Schienen, welche miteinander, insbesondere mittels Laschen (35), verbunden sind, besteht.

8. Anlage nach Patentanspruch 7, **dadurch gekennzeichnet, daß** die Leisten (36) aus magnetisch nicht leitendem Material in den vor Kurven der Trag- und Führungsschiene (3) befindlichen Bereichen vorgesehen sind.

9. Anlage nach einem der Patentansprüche 1 bis 8, **dadurch gekennzeichnet, daß** in Bereichen von Kurven der Trag- und Führungsschiene (3) das Tragseil (5) über an Tragsäulen (7) od.dgl. gelagerten Umlenkrollen (73) geführt ist und die Trag- und Führungsschiene (3) mittels Streben (71) an den Tragsäulen (7) od.dgl. befestigt ist.

10. Anlage nach Patentanspruch 9, **dadurch gekennzeichnet, daß** die Tragund Führungsschiene (3) in Bereichen von Kurven an den Tragsäulen [7] od.dgl. mittels Streben (70) abgestützt ist.

## Claims

1. An installation for moving persons from a mountain station (2) to a valley station (1), having a supporting cable (5), which is guided over supporting pylons (7) or the like, and having in particular carriages (4) displaceable along the supporting cable (5), to which carriages (4) there is attached a device for accommodating at least one person, such as a car, a chair, a supporting harness (40) and the like, **characterised in that** a supporting or guide rail (3) is attached to the supporting cable (5), along which rail (3) the carriages (4) may be displaced from the mountain station (2) to the valley station (1).

2. An installation according to claim 1, **characterised in that** the supporting or guide rail takes the form of a T-shaped rail (3), wherein the upper end of the vertical web (31) of the T-shaped rail (3) is attached to the supporting cable (5) and the laterally projecting legs (32) of the T-shaped rail (3) form the running surfaces for the carriages (4).

3. An installation according to one of claims 1 and 2, **characterised in that** brackets (33) are attached to the upper ends of the vertical web (31) of the T-shaped rail (3), which brackets (33) enclose the supporting cable (5), wherein these brackets (33) may be displaced relative to the supporting cable (5).

4. An installation according to one of claims 1 to 3, **characterised in that** devices (36, 46) for eddy-current braking are provided along the supporting and guide rail (3) for controlling the speed of the carriages (4) travelling along the rail (3).

5. An installation according to one of claims 1 to 4, **characterised in that**, in those areas of the rail (3) where the carriages (4) are to be braked, strips (36) of magnetically non-conducting material, in particular of copper, aluminium and stainless steel, are attached to the rail (3), which strips (36) cooperate with permanent magnets (46) arranged on the carriages (4).

6. An installation according to one of claims 1 to 5, **characterised in that** the carriages (4) comprise at least four running rollers (41) disposed to roll on the upper sides of the transversely projecting legs (32) of the T-shaped rail (3), at least two counter-rollers (42), which roll on the undersides of the legs (32) of the T-shaped rail (3), and in particular four guide rollers (43), which roll on the vertical web (31) of the T-shaped rail (4).

7. An installation according to one of claims 1 to 6, **characterised in that** the supporting and guide rail (3) consists of a plurality of individual rails which are connected together, in particular by means of brackets (35).

8. An installation according to claim 7, **characterised in that** the strips (36) of magnetically non-conducting material are provided in the areas upstream of curved segments of the supporting and guide rail (3).

9. An installation according to one of claims 1 to 8, **characterised in that** the supporting cable (5) is guided over deflecting rollers (73) mounted on supporting pylons (7) or the like in the curved areas of the supporting and guide rail (3) and the supporting and guide rail (3) is attached to the supporting pylons (7) or the like by means of struts (71).

10. An installation according to claim 9, **characterised in that** the supporting and guide rail (3) is supported on the supporting pylons (7) or the like in the curved areas by means of struts (70).

## Revendications

1. Installation pour le mouvement de personnes d'une station haute (2) vers une station basse (1) avec un câble porteur (5), conduit par delà des piliers (7) ou similaires, et avec des chariots (4) circulant en particulier le long du câble porteur (5), auxquels est fixé un dispositif pour accueillir au moins une personne, comme une cabine, un siège, une sangle de suspension (40) ou similaire, **caractérisée en ce qu'**au câble porteur (5) est fixé un rail porteur et de guidage (3), le long duquel les chariots (4) peuvent circuler de la station haute (2) vers la station basse (1).

2. Installation selon la revendication 1, **caractérisée en ce que** le rail porteur et de guidage est formé par un rail (3) en forme de T, l'extrémité supérieure de l'âme verticale (31) du rail en forme de T (3) étant fixée au câble porteur (5) et les montants (32) dépassant latéralement du rail (3) en forme de T constituant les surfaces de roulement pour les chariots (4).

3. Installation selon une des revendications 1 et 2, **caractérisée en ce qu'**aux extrémités supérieures de l'âme verticale (31) du rail (3) en forme de T sont fixées des éclisses (33), qui enveloppent le câble porteur (5), ces éclisses (33) pouvant être déplacées face au câble porteur (5).

4. Installation selon une des revendications 1 à 3, **caractérisée en ce que** le long du rail porteur et de guidage (3) sont prévus des dispositifs (36, 46) pour le freinage en cas de tourbillon, grâce auxquels la vitesse des chariots (4) circulant le long du rail (3) peut être pilotée.

5. Installation selon une des revendications 1 à 4, **caractérisée en ce que** dans les zones du rail (3), dans lesquelles un freinage des chariots (4) doit être effectué, sont fixées des barres (36) faites dans un matériau magnétique non conducteur, en particulier du cuivre, de l'aluminium et de l'inox, barres qui sont concourantes avec les aimants permanents (46) placés sur les chariots (4).

6. Installation selon une des revendications 1 à 5, **caractérisée en ce que** les chariots (4) sont conçus avec au moins quatre galets de roulement (41), qui roulent sur les côtés supérieurs des montants (32) dépassant en oblique du rail (3) en forme de T, avec au moins deux contre galets (42), qui roulent sur les côtés inférieurs des montants (32) du rail (3) en forme de T, et en particulier quatre galets de guidage (43), qui roulent sur l'âme verticale (31) du rail (3) en forme de T.

7. Installation selon une des revendications 1 à 6, **caractérisée en ce que** le rail porteur et de guidage (3) en forme de T se compose d'une pluralité de différents rails, reliés les uns aux autres, en particulier au moyen d'éclisses (35).

8. Installation selon la revendication 7, **caractérisée en ce que** les barres (36) en matériau magnétique non conducteur sont prévues dans les zones situées avant les courbes du rail porteur et de guidage (3).

9. Installation selon une des revendications 1 à 8, **caractérisée en ce que** dans les zones des courbes du rail porteur et de guidage (3) le câble porteur (5) passe sur des galets de renvoi logés aux piliers (7) ou similaires et **en ce que** le rail porteur et de guidage (3) est fixé au moyen d'étais (71) aux piliers (7) ou similaires.

10. Installation selon la revendication 9, **caractérisée en ce que** le rail porteur et de guidage (3) est soutenu dans les zones avant les courbes par les piliers (7) ou similaires au moyen d'étais (71).
